# EUROPÄISCHE PATENTANMELDUNG

(11) **EP 1 363 055 A2**
(43) Veröffentlichungstag der Anmeldung: **19.11.2003**
(21) Anmeldenummer: 03006974.4
(22) Anmeldetag: 27.03.2003
(51) Int. Cl.: F16K 31/06

(54) **Elektromagnetventil**

(30) Priorität: 16.05.2002 DE 10222218
(71) Anmelder: Carl Freudenberg KG, 69469 Weinheim (DE)
(72) Erfinder: Daume, Volker, 69434 Hirschhorn (DE); Bittner, Jörg, 69469 Weinheim-Hohensachsen (DE); Klatt, Christopher, 69118 Heidelberg (DE); Meinig, Uwe, 69469 Weinheim (DE)

(57) **Zusammenfassung**

Magnetventil zum stirnseitigen Abschluß eines in Hubrichtung des Magnetankers und Dichtelements liegenden Dichtsitzes insbesondere Regenerierventil für eine Tankentlüftungsanlage bei Kraftfahrzeugen, wobei der Magnetanker durch Federkraft auf den Dichtsitz gedrückt wird, und wobei der Magnetanker (5) mit dem daran befestigten Dichtelement (6) von zwei am Ventilgehäuse (2) angelenkten Flachfedern (9,1) gehalten ist.

## Beschreibung

Die vorliegende Erfindung befasst sich mit einem Magnetventil zum stirnseitigen Abschluss eines in Hubrichtung des Magnetankers und Dichtelements liegenden Dichtsitzes, insbesondere mit einem Regenerierventil für eine Tankentlüftungsanlage bei Kraftfahrzeugen.

Die Verwendung von elektromagnetischen Dosierventilen ist allgemein bekannt. Bei diesen Ventilen kann der Durchsatz in beiden Bereichen durch Variation des Puls-Pause-Verhältnisses der elektrischen Ansteuerung gesteuert werden. Hierfür wird der Magnetanker, der im Betrieb eine oszillierende Bewegung ausführt, mit variablen Zeitanteilen auf den Dichtsitz gepresst, beziehungsweise je nach der gewünschten Durchsatzmenge vom Dichtsitz abgehoben. Stirnseitig ist der Magnetanker mit einem Dichtsitzelastomer versehen. Diese Ventile sollen in der Regel beständig gegen aggressive Medien sein und auch in einem großen Temperaturbereich ihre Dosiergenauigkeit beibehalten. Sie sollen außerdem möglichst akustisch nicht wahrnehmbar sein und mit möglichst geringen Kosten hergestellt werden können. Überwiegend werden hier Magnetventile eingesetzt, die eine schnelle Bewegung des Dichtelements zulassen und deren Ansteuerungsfrequenz mindestens 10 Hz beträgt. Eine besondere Problematik dieser Magnetventile ist die Lagerung des Magnetankers, der im Betrieb sehr hohe Taktzahlen erreicht und trotzdem eine sehr hohe Lebensdaueranforderung erfüllen soll.

### Stand der Technik

In der DE 42 29 110 C1 ist ein Regenerierventil gezeigt, bei dem das Dichtelement von einer elektrisch angetriebenen Magnetspule betätigt wird. Diese Regenerierventile haben sich in der Praxis bewährt.

### Darstellung der Erfindung

Der Erfindung liegt die Aufgabe zugrunde, eine verbesserte Lagerung des Magentankers zu verwirklichen, um auch nach langen Betriebszeiten des Ventils ein eng toleriertes Kennlinienband sicherzustellen. Außerdem sollen große Durchsätze an Kraftstoffdampf reduziert werden, was zu einer verbesserten Magnetkraft-Weg-Kennlinie führt. Auch soll das Mikrodosierverhalten verbessert werden.

Die Lösung der gestellten Aufgabe erfolgt durch die Merkmale des Anspruchs 1. Bei einem Magnetventil der Eingangs genannten Art wird der Magnetanker mit dem daran befestigten Dichtelement von zwei am Ventilgehäuse angelenkten Flachfedern gehalten. Diese Maßnahme erlaubt eine reibungsfreie Lagerung des Magnetankers. Reibungskräfte, die bei einer sonst üblichen Führung des Magnetankers in einer Ankerbuchse oder auch in Hohlplatten vorhanden sind, werden durch die vorgeschlagene Lösung aufgehoben. Dadurch ergibt sich eine besonders gute Kraft-Weg-Kennlinie für die einzusetzende Magnetkraft. Eine Verkantung des Magnetankers wird durch die Anordnung der Flachfedern beidseitig am Magnetanker sicher vermieden. Ein Verschleiß in einer eventuellen Lagerung des Magnetankers wird vermieden und ein gutes Langzeitverhalten über die gesamte Lebensdauer erreicht. Bevorzugt werden die Flachfedern als Mäanderfedern ausgebildet.

Im Hinblick auf Gewichtsersparnis kann der Magnetanker zylinderförmig ausgebildet sein. Das Dichtelement wird an dem zum Dichtsitz gerichteten Ende des Magnetankers angeordnet. Dabei überdeckt es die innere Bohrung des Ankers.

Ein hoher Durchsatz an Kraftstoffdampf wird ermöglicht, indem der Magnetanker mit seinem oberen Rand den Polkern konzentrisch umfasst. Dadurch kann ein größerer Durchlass verwirklicht werden. Eine besonders günstige Ausgestaltung des Ventils ergibt sich dadurch, dass der Magnetanker koaxial von der Polplatte umgeben ist. Die Polplatte ist mit dem Gehäuse des Magnetventils verbunden und an ihr können beidseitig die Mäanderfedern angebracht sein. Hierfür ist die Polplatte beidseitig mit Abstandsnoppen versehen, an denen die Mäanderfedern befestigt sind. Die Mäanderfedern können mit den Abstandsnoppen verstemmt oder verschweißt sein. Aus fertigungstechnischen Gründen und auch um eine Montage des Führungsblechs am Ventilgehäuse zu erleichtern kann das Führungsblech mit den Mäanderfedern wendesymmetrisch ausgebildet sein, d.h., dass das Führungsblech mit den Mäanderfedern mit dem Ventilgehäuse in jedem Fall verbunden werden kann, gleichgültig mit welcher Seite es in das Gehäuse eingesetzt wird.

Es ist günstig, wenn das Dichtelement aus einem mit Durchbrechungen versehenen metallischen Stützkörper und einer mit dem Stützkörper formschlüssig und/oder kraftschlüssig verbundenen elastomeren Dichtungsauflage besteht. Hierdurch kann eine sehr sichere Verbindung zwischen der Dichtungsauflage und dem Stützkörper hergestellt werden. Außerdem erleichtert der Stützkörper die Verbindung des Dichtelements mit dem Magnetanker. Hierfür wird der Magnetanker an seinem zum Dichtsitz gerichteten Rand mit einer umlaufenden Vertiefung versehen, in welche der Stützkörper eingedrückt wird.

Die Ausgestaltung des Magnetankers mit Dichtelement und Flachfedern, kann besonders vorteilhaft bei einem Regenerierventil eingesetzt werden, bei dem das Ventilgehäuse in seiner Mitte eine Lavaldüse hat, deren Mündung den Dichtsitz bildet.

### Kurzbeschreibung der Zeichnung

Anhand eines Ausführungsbeispiels wird die Erfindung nachstehend näher erläutert.

Es zeigen:
- Fig. 1: das Magnetventil im Längsschnitt,
- Fig. 2: eine Ansicht des Magnetankers mit Flachfeder und Polplatte,
- Fig. 3: eine Seitenansicht des Magnetankers mit Flachfedern und Polplatte und
- Fig. 4: einen Schnitt durch Magnetanker, Flachfedern und Polplatte gemäß der Linie C-C der Figur 2.

### Ausführung der Erfindung

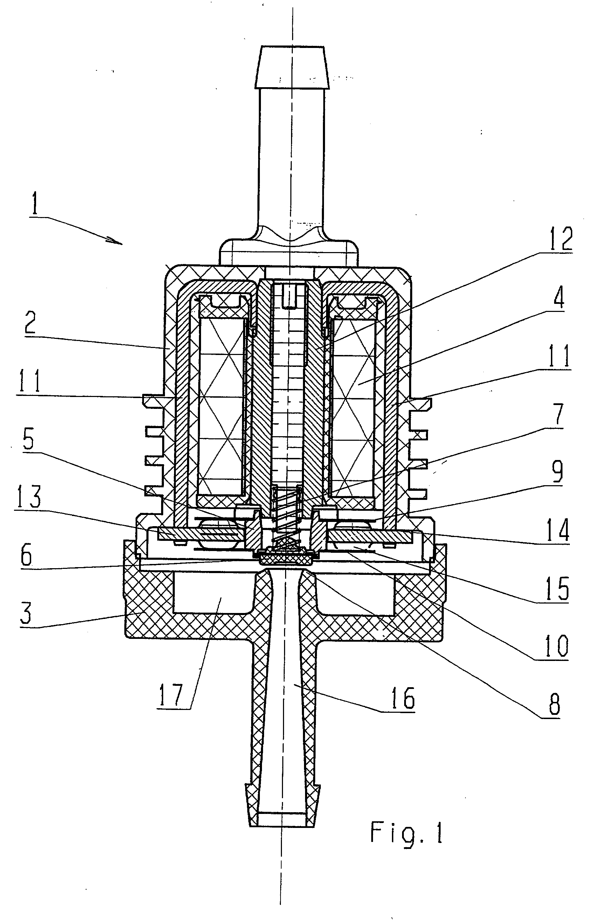

In der Fig. 1 ist ein Magnetventil 1 im Schnitt dargestellt, welches eine hohe Ansteuerungsfrequenz ermöglicht. Das Gehäuse des Magnetventils 1 besteht aus einem Oberteil 2 und einem Unterteil 3. Im Oberteil 2 ist ein Elektromagnet 4 mit dem Polkern 12 eingesetzt. Letzterer wirkt mit dem Magnetanker 5 zusammen, der mit dem Dichtelement 6 versehen ist. Das Dichtelement 6 wird durch die zentral im Elektromagneten angebrachte Feder 7 auf den Dichtsitz 8 gedrückt, der im unteren Gehäuseteil 3 liegt. Eine Ausführungsform ohne Feder 7, bei der allein die Flachfedern 9 und 10 das Dichtelement 6 auf den Dichtsitz 8 drücken ist möglich und bei einigen Anwendungen von Vorteil. Der Magnetanker 5 wird durch die Flachfedern 9 und 10 gehalten, die als Mäanderfedern ausgebildet sind. An den Rückschlußbügeln 11 des Elektromagneten 4 ist die Polplatte 13 angebracht, die gleichzeitig als Aufnahme für den Magnetanker 5 dient. Eine Berührung von Magnetanker 5 und Polplatte 13 ist jedoch nicht gegeben. Die Polplatte 13 ist auf ihrer Ober- und Unterseite mit Abstandsnoppen 14 und 15 versehen, an denen die Mäanderfedern 9 und 10 befestigt sind. Die beiden Gehäuseteile, Oberteil 2 und Unterteil 3 sind miteinander verbunden. In der Mitte des Gehäuseunterteils 3 ist die Lavaldüse 16 eingesetzt, deren Einlauf den Dichtsitz 8 bildet. Das durch das Ventil fließende Medium tritt in die Ringkammer 17 des Ventilunterteils 3 ein und fließt durch die Lavaldüse 16 nach außen.

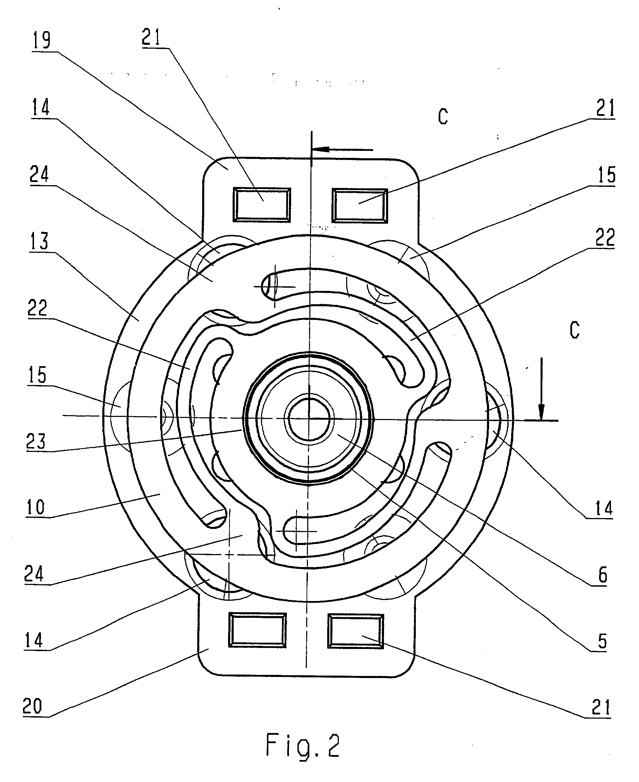

Die Fig. 2 zeigt eine Ansicht der Polplatte 13 mit der daran befestigten Mäanderfeder 10 und dem von der Mäanderfeder 10 gehaltenen Magnetanker 5. Sichtbar ist die Unterseite des Dichtelements 6. Die Polplatte 13 ist mit zwei sich gegenüberliegenden Laschen 19 und 20 versehen, mit denen sie am Rückschlussbügel 11 befestigt wird. Hierfür sind die Öffnungen 21 vorgesehen, in die entsprechenden Zapfen des Rückschlußbügels 11 eingesetzt werden. Die Mäanderfeder 10 ist mit drei Federschenkeln 22 versehen. Mit ihrem innenliegenden Rand 23 ist sie mit dem Magnetanker 5 verschweißt oder verstemmt. An den Anschlussstellen 24 für die Federschenkel 22 ist die Mäanderfeder 10 mit den Noppen 14 ebenfalls verbunden. Die unterhalb der Polplatte 13 liegenden Noppen 15 sind gestrichelt angedeutet. Die unterhalb der Polplatte 13 liegende Mäanderfeder 9 ist an diesen Noppen 15 angestemmt. Die Noppen 15 liegen in Bezug zu den Noppen 14 wendesymmetrisch, d.h., die Polplatte 13 kann sowohl von der einen als auch von der anderen Seite verwendet werden.

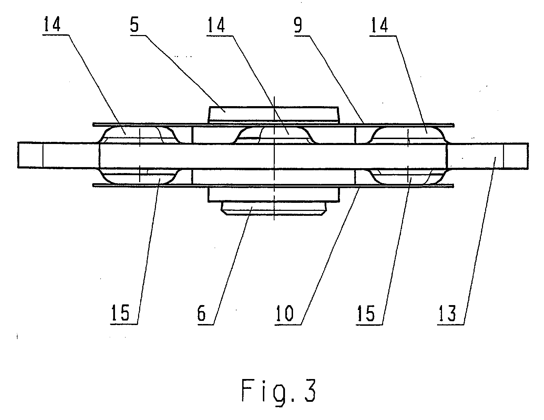

Die Fig. 3 zeigt die Polplatte 13 mit den Mäanderfedern 9 und 10 und dem Magnetanker 5 mit Dichtelement 6 in der Seitenansicht. Sichtbar sind die drei Abstandsnoppen 14 und zwei der gegenüberliegenden Abstandsnoppen 15.

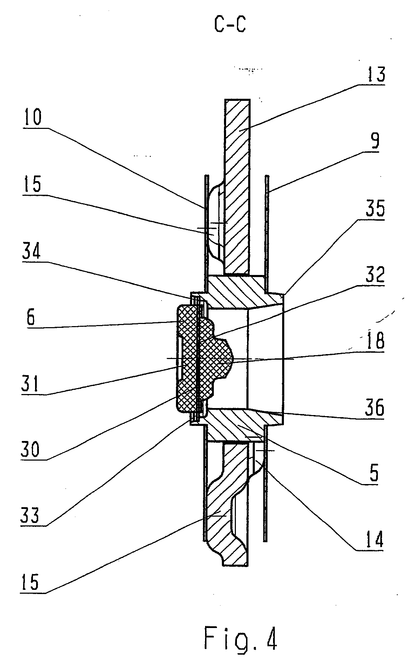

Die Fig. 4 zeigt einen Schnitt durch die Fig. 2 gemäß der Linie C-C. Der Magnetanker 5 wird von den Mäanderfedern 9 und 10 an der Polplatte 13 gehalten. Die Polplatte 13 ist hierfür mit den Noppen 14 und 15 ausgestattet. Wie auf dem unteren Teil der Fig. sichtbar, werden die Noppen 14 und 15 durch Ausprägungen an der Polplatte 13 hergestellt. In den zylindrischen Magnetanker 5 ist das Dichtelement 6 eingefügt. Das Dichtelement 6 besteht aus dem metallischen Stützkörper 30, der mit einer Perforierung versehen ist und der beidseitig des Stützkörpers 30 vorhandenen elastomeren Dichtungsauflage 31 und Öffnungsanschlag 32. Auf den Noppen 18 wird die Feder 7 aufgesetzt. Bei der Anbringung der Dichtungsauflage 31 und des Öffnungsanschlages 32 fließt während des Vulkanisationsprozesses das Elastomer durch die im Stützkörper 30 vorhandene Perforierung, so dass eine formschlüssige Verbindung zwischen dem Stützkörper 30 und der elastomeren Dichtungsauflage 31 bzw. dem Öffnungsanschlag 32 hergestellt wird. Der Rand 33 des Stützkörpers 30 wird in eine umlaufende Ausnehmung 34 am Magnetanker 5 eingesetzt und auf diese Weise das Dichtelement 6 mit dem Magnetanker 5 verbunden. Der zum Polkern 12 gerichtete Rand 35 des Magnetankers 5 ist auf seiner Innenfläche 36 konisch ausgebildet und umfasst den ebenfalls konischen unteren Rand des Polkerns 12. Durch diese Ausbildung und Anordnung von Magnetanker 5 und Polkern 12 ist ein hoher Durchsatz bei geöffnetem Ventil 1 möglich.

## Patentansprüche

1. Magnetventil zum stirnseitigen Abschluß eines in Hubrichtung des Magnetankers und Dichtelements liegenden Dichtsitzes, insbesondere Regenerierventil für eine Tankentlüftungsanlage bei Kraftfahrzeugen, **dadurch gekennzeichnet, dass** der Magnetanker (5) mit dem daran befestigten Dichtelement (6) von zwei am Ventilgehäuse (2) angelenkten Flachfedern (9, 10) gehalten ist.

2. Magnetventil nach Anspruch 1, **dadurch gekennzeichnet, dass** die Flachfedern (9,10) als Mäanderfedern ausgebildet sind.

3. Magnetventil nach Anspruch 1 oder 2, **dadurch gekennzeichnet, dass** der Magnetanker (5) zylinderförmig ausgebildet ist.

4. Magnetanker nach einem der Ansprüche 1 bis 3, **dadurch gekennzeichnet, dass** der Magnetanker (5) mit seinem oberen Rand 835) den Polkern 812) konzentrisch umfasst.

5. Magnetventil nach einem der Ansprüche 1 bis 4, **dadurch gekennzeichnet, dass** der Magnetanker (5) koaxial von der Polplatte (13) umgeben ist.

6. Magnetventil nach einem der Ansprüche 1 bis 5, **dadurch gekennzeichnet, dass** die Polplatte (13) beidseitig Abstandsnoppen (14, 15) hat, an denen die Mäanderfedern (9,10) befestigt sind.

7. Magnetventil nach einem der Ansprüche 1 bis 6, **dadurch gekennzeichnet, dass** die Mäanderfedern (9, 10) mit den Abstandsnoppen (14, 15) verstemmt oder verschweißt sind.

8. Magnetventil nach einem der Ansprüche 1 bis 7, **dadurch gekennzeichnet, dass** die Polplatte (13) mit den Mäanderfedern (9, 10) wendesymmetrisch ausgebildet ist.

9. Magnetventil nach einem der Ansprüche 1 bis 8, **dadurch gekennzeichnet, dass** das Dichtelement (6) mit dem Magnetanker (5) verbunden ist.

10. Magnetventil nach einem der Ansprüche 1 bis 9, **dadurch gekennzeichnet, dass** das Dichtelement (6) aus einem mit Durchbrechungen versehenen metallischen Stützkörper (30) und einer mit dem Stützkörper (30) formschlüssig und/oder kraftschlüssig verbundenen elastomeren Dichtungsauflage (31) bzw. Anschlag (32) besteht.

11. Magnetventil nach einem der Ansprüche 1 bis 10, **dadurch gekennzeichnet, dass** das Dichtelement (6) an dem zum Dichtsitz (8) gerichteten Ende des Magnetankers (5)angeordnet ist.

12. Magnetventil nach einem der Ansprüche 1 bis 11, **dadurch gekennzeichnet, dass** das Gehäuseunterteil 3 in seiner Mitte eine Lavaldüse (16) hat, deren Einlauf den Dichtsitz (8) bildet.
